# EUROPEAN PATENT APPLICATION

(11) **EP 2 667 250 A1**
(43) Date of publication of application: **27.11.2013**
(21) Application number: 11856134.9
(22) Date of filing: 27.05.2011
(51) Int. Cl.: G03B 9/02

(54) **LIGHT INTENSITY ADJUSTMENT DEVICE**

(30) Priority: 18.01.2011 JP 2011007982
(71) Applicant: New Asia Optical Industry Co., Ltd., Tokyo 171-0022 (JP)
(72) Inventor: TAKADA Yoshio, Tokyo 171-0022 (JP)
(74) Representative: Gill, Stephen Charles
(86) International application number: PCT/JP2011/062196
(87) International publication number: WO 2012/098702

(57) **Abstract**

Provision of a light intensity adjuster adapted for use of an infrared ray cutoff filter as necessary for high integrity, without getting excessive in thickness. A light intensity adjuster includes a light intensity adjusting mechanism adapted for variations in opening area to adjust the intensity of transmitted light, and a filter switching mechanism made up to move an infrared ray cutoff filter (43) to a position of opening at the light intensity adjusting mechanism and displace the infrared ray cutoff filter from the position of opening, and has a recess shape portion (110b) provided at a separation member (110) facing the infrared ray cutoff filter at the filter switching mechanism to accommodate the infrared ray cutoff filter to be free from interferences.

## Description

### [Technical Field]

This invention relates to a light intensity adjuster, and more specifically, to that which is operable to have a filter intervening as necessary in an optical path for transmitting light.

### [Background Art]

There are image taking devices employing image pickup elements such as those of a CCD (charge-coupled device) or CMOS (complementary metal-oxide semiconductor), for instance, having a light intensity adjuster mounted for adjusting the intensity of light.

Such image taking devices sometimes have an infrared ray (IR) cutoff filter mounted for cutting rays of invisible light in an infrared region, with the need of displacing the infrared ray cutoff filter out of an optical path for transmitting light at timings involving use in the night or for night vision such as those at a monitoring camera. Therefore, such image taking devices require, besides the light intensity adjuster, also a device for actuating the infrared ray cutoff filter, which might have been separately mounted for large-size cameras, but for recent types being needed to downsize, there is a way of downsizing needed to achieve while implementing integration with the light intensity adjuster.

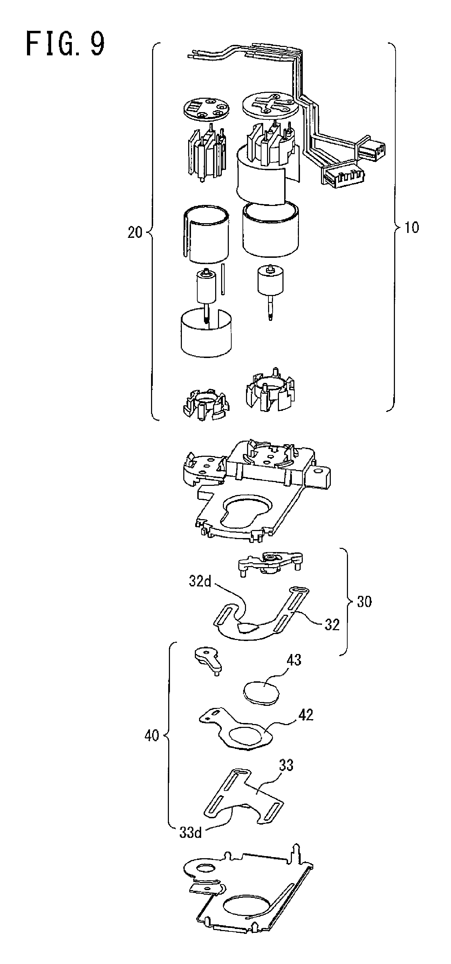

More specifically, there are light intensity adjusters involving, for instance, that which, as shown in Fig. 9, has a drive motor 10 mounted for adaptation to actuate a light intensity adjusting mechanism (as an iris mechanism) 30, using drive forces of the drive motor 10, thereby causing light intensity adjusting members 32 and 33 to have the area of a shape of opening defined between peripheral edges 32d and 33d thereof put in positional relations opposite each other, varied to adjust the light intensity.

And, the light intensity adjuster includes a switching mechanism 40 for an infrared ray cutoff filter mounted as an integral type thereto, which is adapted to actuate a filter switching frame member 42 (for the infrared ray cutoff filter 43), by using drive forces of a drive motor 20, like the light intensity adjusting mechanism 30 described, for insertion and removal of the infrared ray cutoff filter 43 fixed to the filter switching frame member 42 to and from a position of opening defined between the peripheral edges 32d and 33d of the light intensity adjusting members 32 and 33. The light intensity adjuster is thereby adapted to function for a switching to place the infrared ray cutoff filter 43 in a position to cover the opening between the peripheral edges 32d and 33d of the light intensity adjusting members 32 and 33 in the daytime, and on the other hand, displace the infrared ray cutoff filter 43 from that position in the night or when the light intensity is decreased (refer to e.g. the PTL1 and PTL2 below).

### [Citation List]

### [Patent literatures]

PTL1: JP 2010-20063 A
PTL2: JP 2003-348398 A

### [Summary of Invention]

### [Technical problem]

However, at the light intensity adjuster having mounted such the infrared ray cutoff filter, the filter switching frame member 42 to be rotated, like the type in the PTL1 shown in Fig. 9, is interposed between the light intensity adjusting members 32 and 33, to have the infrared ray cutoff filter 43 inserted and removed to and from the position of opening between the peripheral edges 32d and 33d thereof, the infrared ray cutoff filter 43 being simply fixed at one side of the filter switching frame member 42.

The infrared ray cutoff filter 43, a resin film, though being a thin member, simply fixed at one side of the filter switching frame member 42, is rotated within a narrow space, having tendencies to interfere with facing members, with potentials involving a failure to make adequate insertion to or removal from the position of opening between the peripheral edges 32d and 33d of the light intensity adjusting members 32 and 33, or hindrances to actions of the light intensity adjusting members 32 and 33 themselves. Moreover, the light intensity adjusting members 32 and 33 and the like, being resin members after all, tend to produce static electricity, with the potential of having the static electricity acting as a drag to smooth actions, as well.

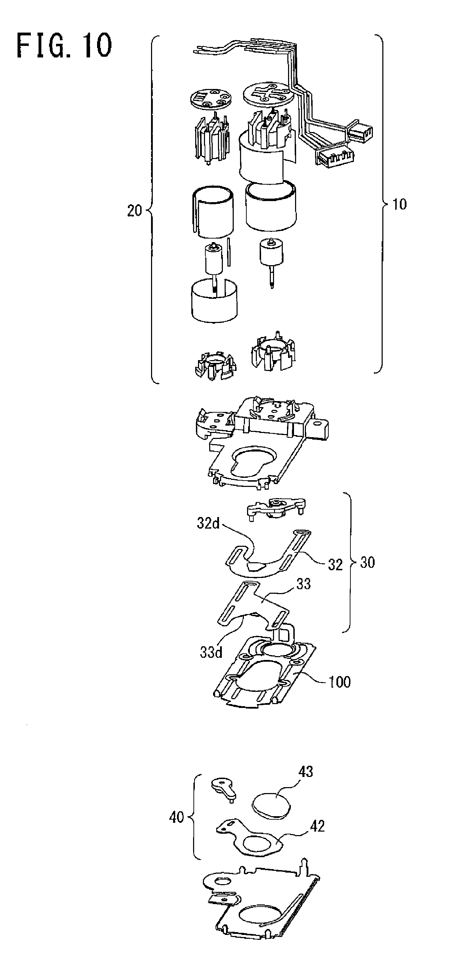

In the meanwhile, for light intensity adjusters of such a kind including a filter switching frame member 42 making different actins relative to light intensity adjusting members 32 and 33, as shown in Fig. 10, there might be use of a separation member 100 interposed in between, as well. In this case, although it might also be achieved to prevent electrostatic influences, there would appear an entirety of the device getting thicker by a proportion of the separation member 100 in addition to thickness dimensions of, among others, the filter switching frame member 42 and an infrared ray cutoff filter 43, thus constituting an obstacle to the downsizing.

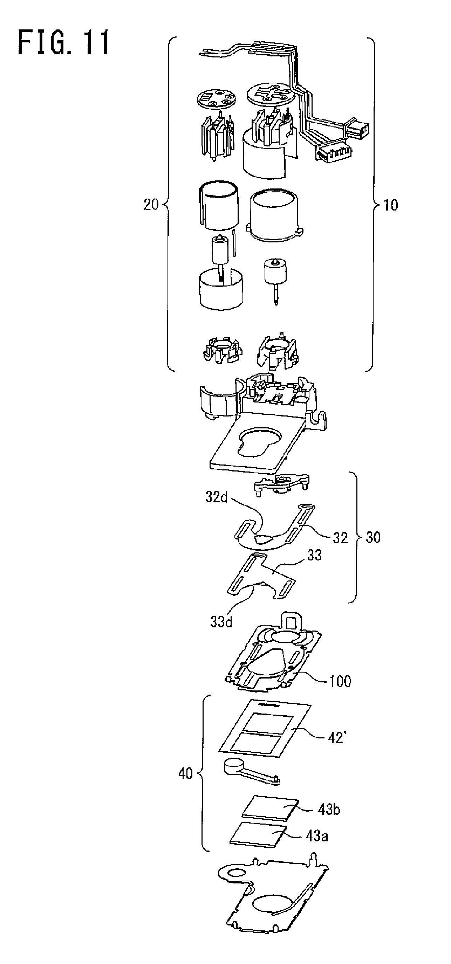

Further, among light intensity adjusters of such a kind, there is also that of a type including, like a type in the PTL2 shown in Fig. 11, a glass-made infrared ray cutoff filter 43b fixed together with a transparent glass 43a to a filter switching frame member 42'. This type is adapted for a switching to have the infrared ray cutoff filter 43b or the transparent glass 43a placed in a position of opening between peripheral edges 32d and 33d of light intensity adjusting members 32 and 33, subject to the glass being thickly made, causing an entirety of the device to be as much thicker as that, thus constituting an obstacle to the downsizing.

And so, it is an object of this invention to provide a light intensity adjuster adapted for use of an infrared ray cutoff filter as necessary for high integrity, without getting excessive in thickness.

### [Solution to problem]

To solve the problem described, according to an aspect of invention of light intensity adjuster, there is provided a light intensity adjuster including an iris mechanism adapted for variations in opening area to adjust an intensity of transmitted light, and a filter switching mechanism configured to move a filter to a position of opening at the iris mechanism and displace the filter from the position of opening, the light intensity adjuster comprising an accommodation space provided at an opposite side member facing a moving member at the filter switching mechanism to accommodate the moving member to be free from interferences.

According to this aspect of invention, the filter or the like constituting a moving member at the filter switching mechanism can be moved within an accommodation space in a facing member, without interferences with other constituent members. It thus allows for high-integrity actions to be ensured, in addition to possible avoidance of getting thick as much as such a dimension would be that a combination of a filter switching mechanism simply including a filter and other constituent members might have when they are simply stacked together.

### [Effects of invention]

Such being the case, according to the aspect of invention, the filter or the like constituting a movable member at the filter switching mechanism is operable to function within an accommodation space in another member being a facing opponent, affording for adaptation to avoid having that member integrated as it is as a member sharing the thickness of an entirety of the device. It thus allows for a model of device planned thinner in its entirety, avoiding interferences with other constituent members, affording for high-integrity function of the filter switching mechanism.

### [Brief Description of Drawings]

[Fig. 1] Fig. 1 is a figure showing an embodiment of light intensity adjuster according to this invention, as an exploded perspective view showing a basic configuration thereof.
[Fig. 2] Fig. 2 is a longitudinal sectional view showing a structure at a drive motor thereof.
[Fig. 3] Fig. 3 is a set of figures showing a structure of the drive motor, including (a) as a top view thereof, (b) as a side view thereof at one direction, and (c) as a side view at a direction different from (b).
[Fig. 4] Fig. 4 is a set of figures showing a light intensity adjusting mechanism thereof, including (a) as a plan view showing a base member and a drive transmission member, (b) as a plan view showing light intensity adjusting members in addition to (a), and (c) as a fragmentary enlarged sectional view showing a configuration of an essential portion supporting the light intensity adjusting members.
[Fig. 5] Fig. 5 is a set of figures showing an infrared ray cutoff filter switching mechanism thereof in a state when working, including (a) as a plan view showing a cover member and the drive transmission member, (b) as a perspective view thereof, and (c) as a fragmentary enlarged sectional view showing a configuration of an essential portion supporting a filter switching frame member thereof.
[Fig. 6] Fig. 6 is a set of figures showing the infrared ray cutoff filter switching mechanism in a state when retreated, including (a) as a plan view showing the cover member and the drive transmission member, and (b) as a perspective view thereof.
[Fig. 7] Fig. 7 is a set of figures showing the infrared ray cutoff filter switching mechanism in the working state, including (a) as a plan view showing a separation member and the drive transmission member, (b) as a perspective view thereof, and (c) as a fragmentary enlarged sectional view showing a configuration of an essential portion supporting the drive transmission member.
[Fig. 8] Fig. 8 is a set of figures showing the infrared ray cutoff filter switching mechanism in the retreat state, including (a) as a plan view showing the separation member and the drive transmission member, and (b) as a perspective view thereof.
[Fig. 9] Fig. 9 is an illustration of a light intensity adjuster according to a relevant art thereto, as an exploded perspective view showing a basic configuration thereof.
[Fig. 10] Fig. 10 is an illustration of a light intensity adjuster according to a relevant art different from Fig. 9, as an exploded perspective view showing a basic configuration thereof.
[Fig. 11] Fig. 11 is an illustration of a light intensity adjuster according to a relevant art different from Fig. 9 and from Fig. 10, as an exploded perspective view showing a basic configuration thereof.

### [Description of Embodiments]

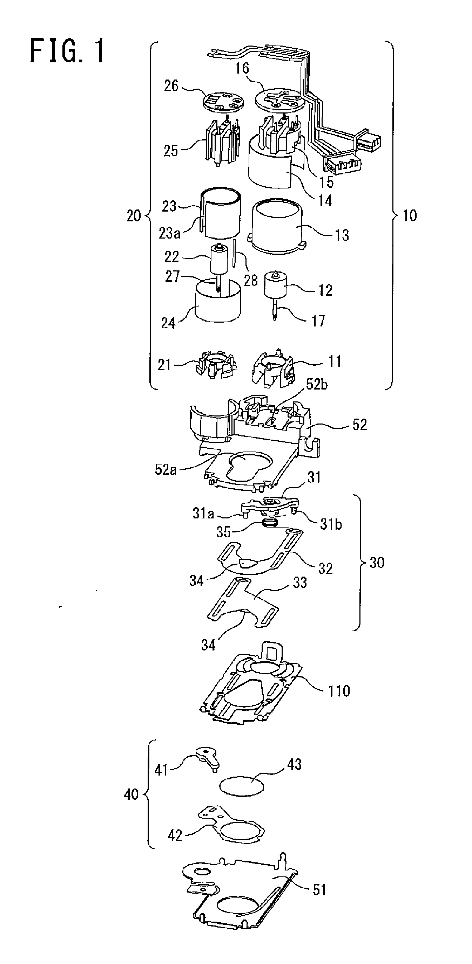

There will be described embodiments of this invention into details, with reference to the drawings. Figures of Fig. 1 to Fig. 8 show an embodiment of light intensity adjuster according to this invention. Here, this embodiment has a basic configuration common to relevant arts illustrated in Fig. 9 to Fig. 11, including similar items of configuration designated by identical reference signs for description.

At Fig. 1, there is a light intensity adjuster having an infrared ray cutoff filter switching mechanism 40 integrally mounted together with a light intensity adjusting mechanism (as an iris mechanism) 30, the light intensity adjusting mechanism 30 being adapted for operations using drive forces of a drive motor 10, and on the other hand, the infrared ray cutoff filter switching mechanism 40 being likewise adapted for operations using drive forces of a drive motor 20.

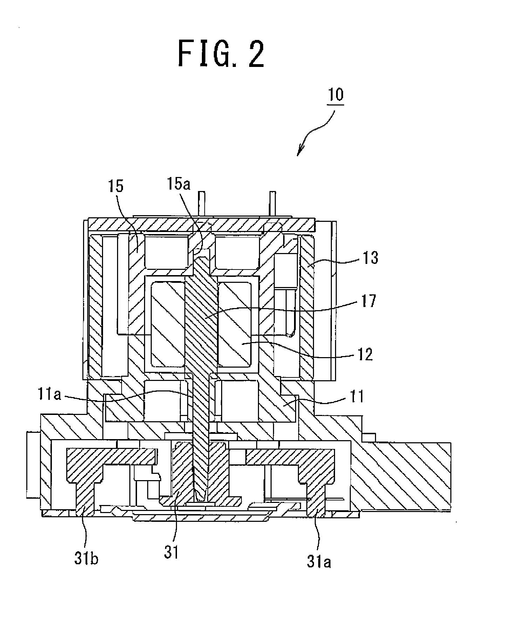

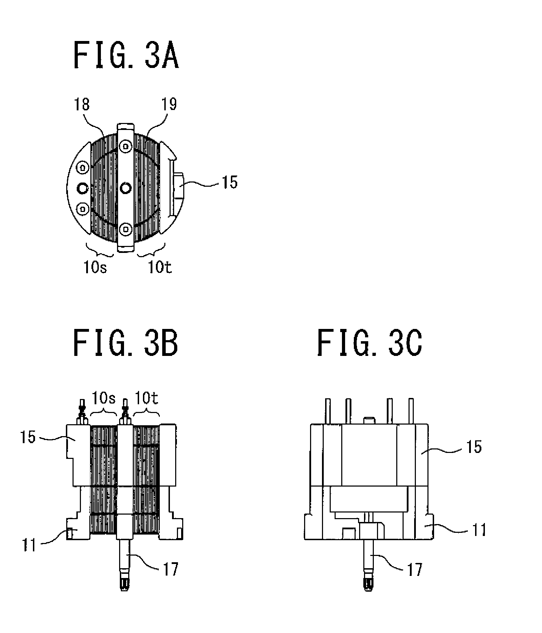

The light intensity adjusting mechanism 30 and the infrared ray cutoff filter switching mechanism 40 have their configurations including the drive motors 10 and 20 assembled on a base member 52. First, at the drive motor 10, as shown in Fig. 2, there is a rotor magnet (as a rotor) 12 fixed on a rotary shaft 17 in an integrally rotatable manner, the rotary shaft 17 being born to be rotatable at both ends inserted in bearing holes 11a and 15a formed in bobbins 11 and 15. Moreover, the rotor magnet 12 is armored, as shown in Fig. 3, by the bobbins 11 and 15 being recessed at parts 10s and 10t having coils (as electric wirings) 18 and speed detecting coils 19 wound thereon, respectively, and is enclosed at outsides thereof by a yoke (as a ferromagnetic material) 13 for preventing external leakage of magnetic fields produced by coils 18 at the bobbins 11 and 15. With this arrangement, the light intensity adjusting mechanism 30 permits the drive motor 10 to have magnetic fields produced by coils 18 at the bobbins 11 and 15, effectively acting on the rotor magnet 12, making it revolve about the rotary shaft 17. It is noted that the drive motor 10 is fixed by hitching an unshown hook on the lower bobbin 11, as the projecting rotary shaft 17 is inserted in an elongate hole 52b in the base member 52, and slid toward an opening 52a that defines an area of optical path to be secured for rays of light passing by and between later-described peripheral edges 32d and 33d of light intensity adjusting members 32 and 33. Then, it is armored by the yoke 13, and fixed by using unshown lugs provided at a lower portion thereof to fit by rotation into flanged parts of the base member 52. The yoke 13 has an upper portion reduced in diameter to implement a structure for holding the upper bobbin 15. Further, in the figure, designated at 16 is a printed circuit board, the printed circuit board 16 supplying electric currents to the coils 18 for rotating the rotary shaft 17 to drive, while involving necessary circuits for the speed detecting coils 19, as well, and being assembled in a compact form at one side of the yoke 13. Still more, designated at 14 is an insulating tape.

The light intensity adjusting mechanism 30 has a drive force transmitting member 31 integrally formed in a joining or mating manner at one end of the rotary shaft 17 of the drive motor 10, in a lever shape extending in two lateral directions perpendicular thereto, the drive force transmitting member 31 having, at end parts of the lever shape, engagement pins 31a and 31b engaged with the light intensity adjusting members 32 and 33 being made of a light shielding material. With this arrangement, the light intensity adjusting mechanism 30 is adapted to transmit drive forces of the drive motor 10 through the drive force transmitting member 31 to the light intensity adjusting members 32 and 33, to change the area of a shape of opening defined by and between the peripheral edges 32d and 33d being put in positional relations opposite each other, thereby adjusting the intensity of light. It is noted that, in the figure, designated at 34 are filters. As the filters 34, for instance, ND (neutral density) filters or the like may be applied, as necessary, for the size of aperture to be secured, affording for an optimal picture to be taken up. Further, designated at 35 is a spring, the spring 35 biasing the drive force transmitting member 31 to rotate in one direction, affording for a facilitated drive control of the drive motor 10.

On the other hand, for the infrared ray cutoff filter switching mechanism 40, the drive motor 20 is built in a structure including, like the light intensity adjusting mechanism 30, a combination of bobbins 21 and 25, a rotor magnet 22, a yoke 23, and a rotary shaft 27, for adaptation to transmit driving revolutions (drive forces) of the drive motor 20 to a drive force transmitting member 41 that has an engagement pin 41a at an end of a lever shape extending in one direction, to thereby actuate a filter switching frame member 42 (for an infrared ray cutoff filter 43) that is engaged therewith. With this arrangement, the infrared ray cutoff filter switching mechanism 40 is adapted to transmit drive forces of the drive motor 20 through the drive force transmitting member 41 to the filter switching frame member 42, to thereby actuate an infrared ray cutoff filter 43 fixedly attached to the filter switching frame member 42, for insertion to and removal from a position of opening defined by and between the peripheral edges 32d and 33d of the light intensity adjusting members 32 and 33, whereby the infrared ray cutoff filter 43 can be switched, for instance, in the manner of placing in a position for covering the opening between the peripheral edges 32d and 33d of the light intensity adjusting members 32 and 33 in the daytime, while displacing from the position in the night or when the light intensity is decreased. It is noted that, like the drive motor 10, also the drive motor 20 as made up is assembled to the base member 52, and includes a printed circuit board 26. Further, designated at 24 is an insulating tape.

Here, the infrared ray cutoff filter switching mechanism 40 has measures including a magnetic body such as a metallic pin 28 (which may be a metallic piece or magnet) inserted for disruption of the magnetic balance, and a cutout 23a formed in part of the yoke 23 for disruption of the magnetic balance, for adaptation to cause the filter switching frame member 42 to be moved to a predetermined position, such as that for the position covering the opening between the peripheral edges 32d and 33d of the light intensity adjusting members 32 and 33 or for a position displaced therefrom, when powered off. It is noted that provision of the mechanism according to this embodiment may be substituted by normal conduction of electric current, or provision of a biasing measure, such as a spring or plate spring, for adaptation to cause a movement to the position described, or that the filter switching frame member 42 may be left as it is held in a switched position, or may be kept from being positioned, to render free, even when powered off.

And, the light intensity adjuster incudes a separation member 110 assembled to the base member 52 for separation between spaces for movements of the light intensity adjusting members 32 and 33 at the light intensity adjusting mechanism 30 and those of the filter switching frame member 42 (for the infrared ray cutoff filter 43) at the infrared ray cutoff filter switching mechanism 40, substituting for the separation member 100 shown in Fig. 10 or that in Fig. 11. The light intensity adjusting members 32 and 33 are installed as interior parts at one side of the separation member 110, while the filter switching frame member 42 is supported on or by the cover member 51, as an interior part in between.

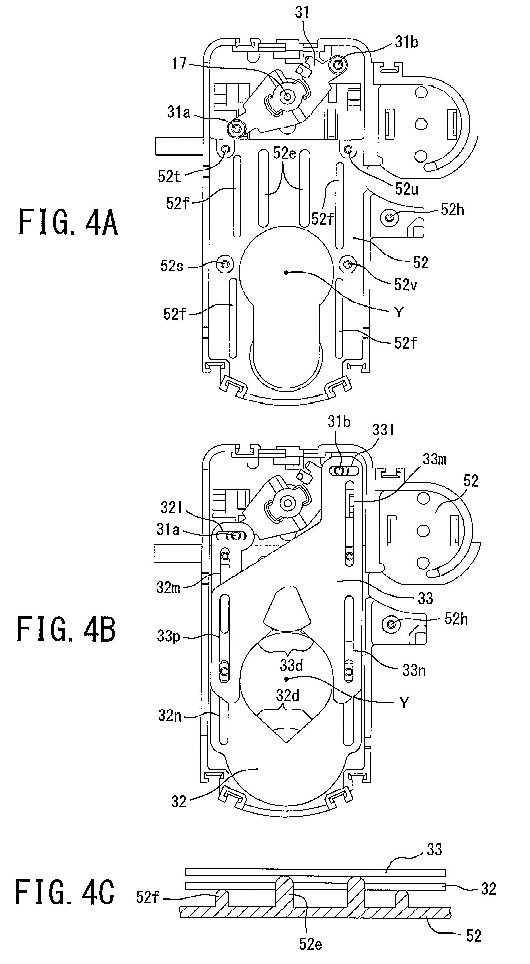

More specifically, at the light intensity adjusting mechanism 30, as shown in Fig. 4, the drive force transmitting member 31 fixed on the rotary shaft 17 of the drive motor 10 has the engagement pins 31a and 31b rotating in a reciprocating manner, the engagement pins 31a and 31b of the drive force transmitting member 31 being engaged with engagement slots 321 and 331 of the light intensity adjusting members 32 and 33 extending as elongate holes in lateral directions in the figure, whereby the light intensity adjusting members 32 and 33 are adapted to make interlocked movements permitting the engagement pins 31a and 31b to reciprocally rotate. The light intensity adjusting members 32 and 33 have guide slots 32m, 32n, 33m, and 33n formed in parallel to a straight line interconnecting the optical center Y and the center of the rotary shaft 17 at the drive motor 10, the guide slots 32m, 32n, 33m, and 33n being respectively engaged with pins 52t to 52v erected on the base member 52, whereby they are held to be slidable in the parallel direction, with attitudes kept constant when acting (moving).

The light intensity adjusting members 32 and 33 are interlocked with reciprocal rotation of the engagement pins 31a and 31b at the drive force transmitting member 31, to move in mutually opposite senses of a direction of the straight line interconnecting the optical center Y and the center of the rotary shaft 17, thereby causing the area of an opening defined between the peripheral edges 32d and 33d facing each other to be varied, having a resultant range of opening constituting a size of aperture for passing a flux of light, adjusting the intensity of light.

Here, the base member 52 has, at a side thereof facing the light intensity adjusting members 32 and 33, projections 52e and 52f shaped in the forms of smooth continued ribs arched at tops in their sections, and formed to extend in parallel with moving directions of the light intensity adjusting members 32 and 33, the rib-shape projections 52e and 52f abutting at the tops on, while supporting, the light intensity adjusting members 32 and 33. The rib-shape projections 52e and 52f have different heights to support the light intensity adjusting members 32 and 33 to be kept from contacting each other at opposing sides thereof. The light intensity adjusting members 32 and 33, having surfaces thereof typically provided with anti-reflection measures giving rough surface accuracies to the surfaces, constituting significant sliding loads, undergo contact loads with the rib-shape projections 52e and 52f, which however are limited simply to their tops, thus being reduced, concurrently with interferences between the light intensity adjusting members 32 and 33, which also are reduced.

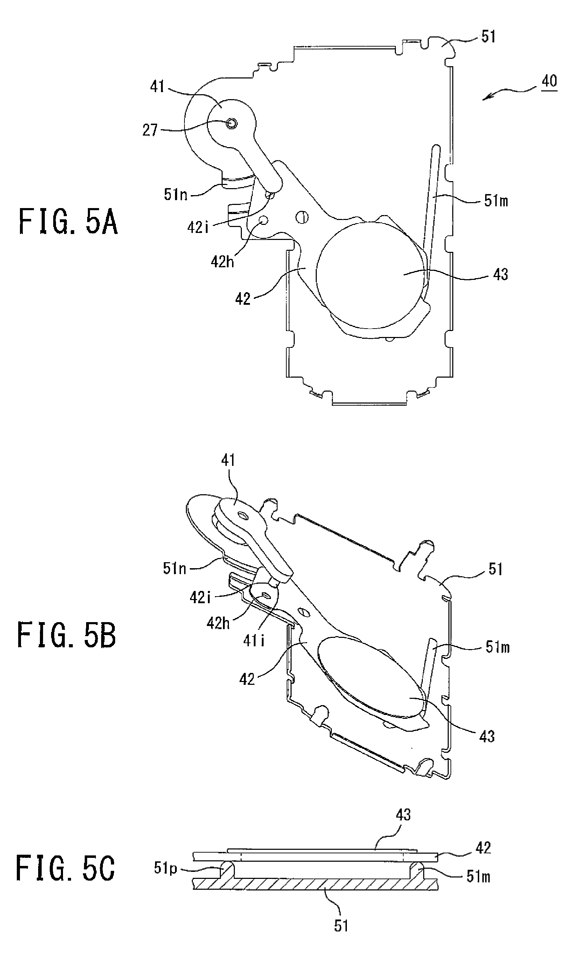

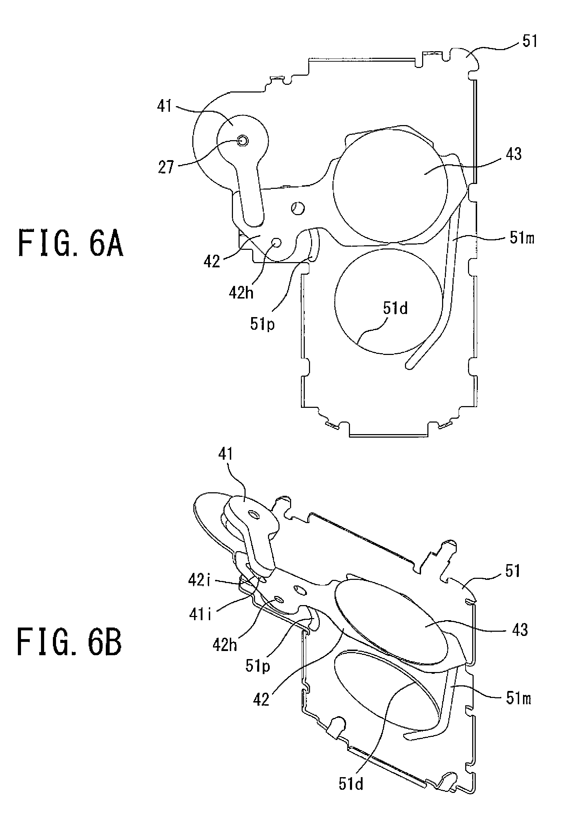

On the other hand, at the infrared ray cutoff filter switching mechanism 40, as shown in Fig. 5 and Fig. 6, the filter switching frame member 42 has an engagement hole 42h thereof engaged with an engagement shaft 52h erected on the base member 52, whereby it is adapted to make reciprocal rotational actions about the engagement shaft 52h, interlocking with rotational actions of the drive force transmitting member 41. The drive force transmitting member 41 is adapted to reciprocally rotate about the rotary shaft 27 of the drive motor 20, while having an engagement pin 41i at a distal end thereof engaged with an elongate hole 42i of the filter switching frame member 42, making reciprocal rotational actions, causing the filter switching frame member 42 to make reciprocal rotational actions in an interlocking manner. It is noted that the filter switching frame member 42 is made, typically, as a resin film, a metallic film, or the like being 0.1 mm or less, and that the infrared ray cutoff filter 43 fixed to the filter switching frame member 42 is made, typically, as a resin film being 0.2 mm or less (or as a glass product being 0.5 mm or less) and fixed by a bonding or by a welding.

Here, like the base member 52, the cover member 51 has, at a side thereof facing the filter switching frame member 42, projections 51m and 51p shaped in the forms of smooth continued ribs arched at tops in their sections, and formed at two locations to extend in the manner of imitating moving directions of the filter switching frame member 42, the rib-shape projections 51m and 51p abutting at the tops on, while supporting, the filter switching frame member 42. The rib-shape projections 51m and 51p prevent the engagement pin 41i of the drive force transmitting member 41 from deviating from the elongate hole 42i of the filter switching frame member 42, while affording to reduce also sliding loads due to contact. It is noted that, in Fig. 6, designated at 51d is an opening formed through the cover member 51 for an optical path to be secured.

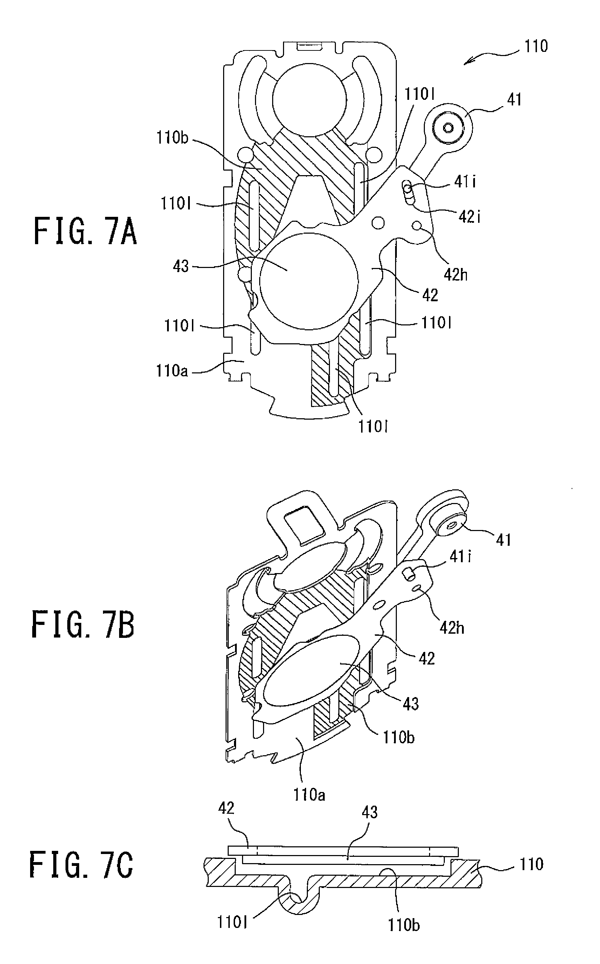

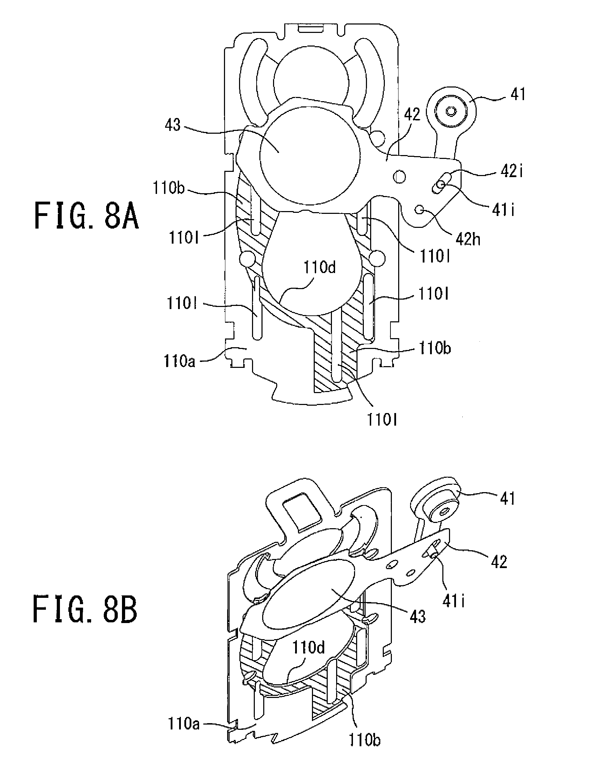

Moreover, the separation member 110 is formed, as shown in Fig. 7 and Fig.8, with a recess shape portion (as an accommodation space) 110b recessed toward a side thereof (at the back of the paper sheet) opposite the filter switching frame member 42 (with a range of formation hatched in the figure). The recess shape portion 110b is configured to define a space for accommodating the infrared ray cutoff filter 43 in a non-contacting manner, as it is left fixed at one side of the filter switching frame member 42 when moved, while contacting on, to support, the filter switching frame member 42 around the infrared ray cutoff filter 43 being moved, at a periphery 110a thereof.

The separation member 110 has a projection 1101 shaped in the form of a smooth continued rib protruded in a rib shape at a side thereof opposite the light intensity adjusting members 23 and 33 (at the back of the paper sheet) and arched at a top in a section thereof, formed to extend in parallel with moving directions of the light intensity adjusting members 23 and 33, and configured to abut at the top of the rib-shape projection 1101 on the light intensity adjusting members 23 and 33, supporting this, while having reduced sliding loads.

By doing so, at the separation member 110, the recess shape portion 110b is formed with a depth being a thickness of the infrared ray cutoff filter 43 + *α*. Therefore, even when employing a structure including the separation member 110 interposed to intervene between the light intensity adjusting mechanism 30 and the infrared ray cutoff filter switching mechanism 40, there can be a construction implemented without the need of taking a thickness (W + I + S) equal to a simple sum of a thickness W of the filter switching frame member 42, the thickness I of the infrared ray cutoff filter 43, and a thickness S of the separation member 110, that is, with a thickness (W + S) excluding a proportion of the thickness I of the infrared ray cutoff filter 43, as it is subtracted. As a result of this, there can be an enhancement in performance quality attributable to the intervening separation member 110, combined with concurrent preventions against potential interferences between the infrared ray cutoff filter 43 and other constituent members.

Such being the case, according to this embodiment, even when having the infrared ray cutoff filter switching mechanism 40 integrally mounted together with the separation member 110, besides the light intensity adjusting mechanism 30, the infrared ray cutoff filter 43 to be provided at the filter switching frame member 42 can be accommodated inside the recess shape portion 110b of the separation member 110, without causing interferences with the separation member 110, without getting thick, while affording for the infrared ray cutoff filter 43 to be inserted and displaced to and from a position of opening defined by the peripheral edges 32d and 33d of the light intensity adjusting members 32 and 33, allowing for high-integrity functions. Accordingly, there can be a device implemented in a thin size in its entirety, allowing for a high-integrity function at the filter switching mechanism 40.

More specifically, for light intensity adjusters of this type of which entire thickness dimensions are set to a 2.1 mm in most cases, when having an infrared ray cutoff filter switching mechanism 40 mounted to be integral besides a light intensity adjusting mechanism 30, if the configuration includes the separation member 100 shown in Fig. 10 or Fig. 11 added as it is, there appear dimensions exceeding the 2.1 mm, which are difficult to employ. However, according to this embodiment, there can be use of a separation member 110 permitting an allowance to be secured as much as a proportion of the thickness of an infrared ray cutoff filter 43, affording for the device to have a thickness of 2.1 mm or less secured in its entirety, while achieving high-integrity functions, thus allowing for implementation of a device to be thin-sized along recent trends involving a lens unit to be down-sized, as well as an image pickup device to be enhanced in the number of pixels.

According to another mode of this embodiment, there may be an accommodation hole formed in a shape penetrating to a backside, to have a space secured for accommodation of an infrared ray cutoff filter 43, substituting for provision of the recess shape portion 110b, when the infrared ray cutoff filter 43 is thick (or the separation member 110 is required to be thinner), although illustration is omitted. In this case also, there can be achieved similar effects to the embodiment described.

Moreover, according to the embodiment described, there is a separation member having an accommodation space formed therein for a moving member (being a filter), which however is not limited thereto, subject to provision of an accommodation space formed in a facing member. For instance, assuming a structure facing light intensity adjusting members 32 and 33, there may be an accommodation space formed in a facing range thereof. It however is noted that provision of an intervening separation member allows for a driving with the higher quality, giving preference to employment of the embodiment described.

Here, according to embodiments of this invention, the application is preferable when the filter has a thickness of 0.2 mm or less. Moreover, when the separation member has a thickness of 0.2 mm or less, the filter may preferably have a thickness of 0.2 mm or less not exceeding the thickness of the separation member. Further, they are effective when the iris mechanism and the filter switching mechanism have exterior members 2 mm or less in thickness, and are applicable when the filter is an infrared ray cutoff filter or the like.

The scope of this invention is not limited to illustrative embodiments shown in the drawings and described, and covers any and all embodiments bringing equivalent effects to what the invention has as its object. Moreover, the scope of this invention is not limited to combinations of features of invention defined by the claims, but defined by any and all desirable combinations of specific features among any and all disclosed features.

### [Industrial Applicability]

Although embodiments of this invention have been described hitherto, this invention is not limited to the embodiments described, and may be embodied in various modes within the scope of its technical concept, as a matter of course.

### [Reference Signs List]

10, 20 drive motor
17, 27 rotary shaft
30 light intensity adjusting mechanism
31,41 drive force transmitting member
32,33 light intensity adjusting member
32d, 33d peripheral edge
40 infrared ray cutoff filter switching mechanism
42 filter switching frame member
43 infrared ray cutoff filter
51 cover member
51m, 51p, 51e, 52f, 1101 rib-shape projection
52 base member
110 separation member
110b recess shape portion

## Claims

1. A light intensity adjuster including an iris mechanism adapted for variations in opening area to adjust an intensity of transmitted light, and a filter switching mechanism configured to move a filter to a position of opening at the iris mechanism and displace the filter from the position of opening, the light intensity adjuster comprising an accommodation space provided at an opposite side member facing a moving member at the filter switching mechanism to accommodate the moving member to be free from interferences.

2. The light intensity adjuster according to claim 1, wherein the filter switching mechanism comprises a frame member configured to have the filter fixed at one side, to move while holding, and the accommodation space is defined at a moving range of the filter, as the filter is the moving member.

3. The light intensity adjuster according to claim 1 or 2, comprising a separation member interposed between the iris mechanism and the filter switching mechanism for separation of movement spaces to avoid interferences between associated moving members, wherein the accommodation space is defined at a range of the separation member facing the moving member at the filter switching mechanism.

4. The light intensity adjuster according to claim 3, wherein at the range facing the moving member, the separation member is formed in a recess shape or has the accommodation space defined to penetrate to a rear side.

5. The light intensity adjuster according to any one of claims 1 to 4, comprising a guide shape portion formed at one or each of the moving member and a member facing the moving member, in a convex shape projecting toward an opposite end in between to guide a movement of the moving member.
